(19) Europäisches Patentamt
European Patent Office
Office européen des brevets

(11) **EP 2 255 660 B1**

(12) **EUROPEAN PATENT SPECIFICATION**

(45) Date of publication and mention
of the grant of the patent:
**01.02.2012 Bulletin 2012/05**

(51) Int Cl.:
*A01N 63/00* *(2006.01)*  *A01P 3/00* *(2006.01)*
*A01P 5/00* *(2006.01)*

(21) Application number: **10163792.4**

(22) Date of filing: **25.05.2010**

(54) **Biocontrol agent against soil-borne diseases**

Biokontrolmittel bodenbürtigen Krankheiten

Agents de biocontrôle des maladies véhiculées par le sol

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **27.05.2009 CN 200910026866
11.12.2009 PCT/CN2009/075496**

(43) Date of publication of application:
**01.12.2010 Bulletin 2010/48**

(73) Proprietors:
• **Nau Biogenic Pesticides R&D Co., Ltd
Nanjing Jiangsu 210095 (CN)**
• **Nanjing Agricultural University
Jiangsu 210095 (CN)**

(72) Inventors:
• **Guo, Jianhua
Nanjing Jiangsu 210095 (CN)**
• **Liu, Hongxia
Nanjing Jiangsu 210095 (CN)**
• **Li, Shimo
Nanjing Jiangsu 210095 (CN)**

(74) Representative: **ABG Patentes, S.L.
Avenida de Burgos 16D
Edificio Euromor
28036 Madrid (ES)**

(56) References cited:
**CN-A- 101 063 093  CN-A- 101 273 724**

Remarks:
The file contains technical information submitted after the application was filed and not included in this specification

**Description**

**FIELD OF THE INVENTION**

The present invention belongs to the technical field of crop disease control, more particularly, it relates to harmless biocontrol composite microbial agent combinations that can prevent and cure a plurality of soil-borne diseases of vegetable.

**BACKGROUND OF THE INVENTION**

Soil-borne plant pathogens are usually soil inhabitants, such as *Ralstonia solanacearum* which causes Solanaceae crops Ralstonia wilt, *Fusarium oxysporium* and *Verticillium dahlaei* that cause a variety of plant wilt and yellow dwarf diseases, *Rhizoctonia solani Kuhn* which causes rice sheath blight, as well as *Meloidogyne* spp. which is more seriously endangering everywhere in recent years.

Solanaceae crops Ralstonia wilt is a global disease, and the pathogenic bacteria can infect more than 50 branches of 200 kinds of plants, resulting in global economic losses as much as 12 billion U.S. dollars; *Phytophthora capsicum* causes great loss on vegetable production in China all year round; root knot nematode (*Meloidogyne* spp.) infects protected vegetables, leading to the reduction of output for host by 15-25% every year, sometimes more than 70%, which severely restricts the production and export of vegetables. During the production, these diseases tend to occur simultaneously, for example, the root-knot nematode disease, bacterial wilt and fungal wilt often occur in the tomato greenhouses simultaneously, thus forming a composite infection and resulting in very serious losses.

The cultivation area and production of banana is number four in the rank of all fruit in China. Fusarium wilt of banana is a destructive soil-borne vascular bundle disease, and the pathogen spreads quickly, thus it is very difficult to be cured. The disease is becoming more and more serious in recent years in China, and its incidence rate is 10% to 40%, even up to 90%.

Rice sheath blight is a serious global disease that influences the production of rice, and is also one of the three major diseases in China. Due to the strong saprophytic and wide host range of *Rhizoctonia solani*, especially the promotion of high quality rice varieties and the application of high productivity field close planting technology, the disease is becoming increasingly serious and cause some loss of rice production every year. The yield of rice can drop by 50% in serious region, which is a direct threat to the high and stable yield of rice. The sheath blight resistance varies in different rice varieties, but the immune and highly resistant variety has not yet been found.

These soil-borne diseases are characterized by a wide host range, strong stress resistance and difficult eradication, and the prevention and control of complex infection is particularly difficult. In production, often there are neither good disease-resistant cultivars nor effective chemical control agents, whereas excessive application of pesticides brings a series of ecological and social problems, such as resistance generated by pests and weeds, direct harm on nontarget organisms, the pollution on soil, water and atmosphere, bio-accumulation effects on human health, and restrictions of international trade on pesticide residue in agricultural products. As early as 1992, United Nations Conference on Environment and Development (UNCED) requested that "the sale and use of chemical pesticides should be controlled on a global scale," and it has become the consensus of mankind that people can not be over dependent on chemical pesticides. With the development of economy and the improvement of people's standard of living, people pay increasing attention to food security, and green vegetable and organic agricultural products are receiving more favor from the people.

Green vegetables ("pollution-free") have already become the mainstream of the world's vegetable production. China has began to conduct research and production of pollution-free vegetable since 1982, when a national biological control conference was convened, and JiangSu Province proposed replacing chemical pesticides with biological control firstly in the conference. In 1983, with the energetic support of the National Plant Protection Station, twenty-three provinces or municipalities carried out research, demonstration and promotion on green vegetables. Social needs of safe and healthy food promote the research on application of pollution-free methods to control pests. Through the following mechanisms, such as competition of space and nutrition, directly secreting extracellular enzyme with degradation, producing antibiotic to inhibit pathogen, and inducing resistance of plant, biocontrol strain can not only reduce environmental pollution caused by the use of chemical pesticides and improve farm value, but also can improve the soil micro-ecological environment and suppress pest populations, thus it is beneficial to the sustainable production of crops and provides strong protection for the production of green vegetables in China.

Through several years of practice, people explore a set of integrated techniques for control of pests and diseases and reduction of pesticide pollution to produce green vegetables, and also develope a number of biological fungicide, such as agricultural streptomycin and Jinggangmycin, wherein, the former can be used to prepare a solution of 200 mg/L for controlling vegetable soft rot, bacterial wilt, and the later is used to prepare 1000-1500 times solution of controlling vegetables anthracnose, downy mildew. However, there is still no biocontrol agents which are able to simultaneously control a plurality of soil-borne diseases at present such as those of vegetables, bananas, rice and other crops.

In the prior art, according to the method in patent for the bacteria preservative fluid of our laboratory (Publication No.: CN1358838, Publication Date: July 17, 2002), biomass can be stored for 2 to 3 years at room temperature.

It is therefore necessary to develop new agents for the control of soil-borne vegetable diseases overcoming all or part of the problems associated to known products such as the serious pollution and excessive cost caused by chemical pesticides or the fact that there exist no high-efficient biocontrol agents against a variety of soil-borne diseases.

## BRIEF DESCRIPTION OF THE INVENTION

The present inventors have surprisingly found new composite biocontrol microbial agents which have high anti-microbial agent efficiency in a variety of products such as vegetables, fruits (e.g. bananas), cereal (e.g. rice) or the like. Further, the agents of the present invention are useful in the prevention and treatment of a variety of soil-borne diseases and therefore effective against the mixed attack of a plurality of soil-borne diseases existing in greenhouse and field. At the same time, they are harmless and can increase production of crops, thereby reducing the costs.

In a first aspect, the present invention is directed to a biocontrol composite microbial agent (herein named "PS combination") comprising:

- the PX35 strain of *Bacillus* spp. CGMCC 1930; and
- the SM21 strain of *Bacillus* spp. CGMCC 2058.

In a second aspect, the present invention is directed to a biocontrol composite microbial agent (herein named "PSX combination") comprising:

- the PX35 strain of *Bacillus* sp. CGMCC 1930;
- the SM21 strain of *Bacillus* sp. CGMCC 2058; and
- the XY21 strain of *Serratia* sp. CGMCC 2059;

CN 101 273 724 and CN 101 063 093 describe a mixture of SMZ1 and XY21, respectively the strain PX35.

In another aspect, the present invention is directed to a method for preparing the PS or the PSX combination as defined above comprising the following steps:

1) inoculating the strains (PX35 and SM21 for PS combination; PX35, SM21, and XY21 for PSX combination) into PDA culture solution and cultivating them until their optical density (OD) values at 600 nm are within about 0.1-1;
2) adding the seed liquid to PDA culture solution, shaking, cultivating and centrifugating to obtain wet bacteria; and
3) mixing wet bacteria and bacterial preservative to obtain the microbial agents and then mixing the at least two (for PS combination) or at least three (for PSX combination) microbial agents to obtain the composite biocontrol microbial agent combination of the invention.

In a preferred embodiment, the strains are cultivated till their optical density (OD) values at 600 nm are within about 0.5-0.8.

The uses of the PS and the PSX combination in preventing and controlling soil-borne diseases of various vegetables and crops represent additional aspects of the present invention.

## BRIEF DESCRIPTION OF THE FIGURES

**Fig. 1**: Biocontrol of Phytophthora blight on pepper in greenhouse

**Fig. 2**: Growth promotion of PSX combination on pepper in greenhouse

**Fig. 3**: Biocontrol and plant growth promotion efficacy of PSX combination in the fields; " ⬛ " means infected center in which some peppers were diseased or have been uprooted.

**Fig. 4**: Field experiment against complex disease on tomato in Shangdong province

**Fig. 5**: Field experiment against Ralstonia wilt on tomato in Fujian province

**Fig. 6**: Biocontrol efficacy of PSX combination towards Root knot nematode disease on cucumber in the field (Xuzhou city of Jiangsu province)

Fig. 7: Biocontrol efficacy of PSX combination towards Root knot nematode disease on cucumber in the field (Handan city of Hebei province)

Fig. 8: Biocontrol efficacy of PSX combination towards Root knot nematode disease on watermelon in the field (Huaian city of Jiangsu province)

Fig. 9: Biocontrol efficacy of PSX combination towards Fusarium wilt in greenhouse

Fig. 10: Biocontrol efficacy of PSX combination towards Fusarium wilt in field (Dongguan, Guangdong province)

Fig. 11: Thirty days after the first treatment of PSX combination in the field (Lujiang, Anhui province)

Fig. 12: Biocontrol efficacy and plant growth promotion of PSX combination at the harvesting time in the field (Zhenjiang, Jiangsu province)

## DETAILED DESCRIPTION OF THE INVENTION

The present invention is directed to biocontrol agents against crop soil-borne diseases which have significant control effects compared with other bio-bactericides with single antibacterial spectrum. Moreover, they are particularly useful for addressing the mixed attack of soil-borne vegetable diseases. As they are biological agents, they do not have the pollution problems brought by the use of chemical pesticides, so they are in favor of the production of green vegetables, and thus farmers can avoid using chemical pesticides or decrease the pesticide dosage, which can not only save expense for farmers but also be beneficial to vegetables export. Meanwhile, the microbial agents also have the function of increasing production, thus increasing the income of farmers.

As used herein, the term "about" means a slight variation of the value specified, preferably within 10 percent of the value specified. Nevertheless, the term "about" can mean a higher tolerance of variation depending on for instance the experimental technique used. Said variations of a specified value are understood by the skilled person and are within the context of the present invention. Further, to provide a more concise description, some of the quantitative expressions given herein are not qualified with the term "about". It is understood that, whether the term "about" is used explicitly or not, every quantity given herein is meant to refer to the actual given value, and it is also meant to refer to the approximation to such given value that would reasonably be inferred based on the ordinary skill in the art, including equivalents and approximations due to the experimental and/or measurement conditions for such given value.

An "effective amount" is an amount sufficient to effect beneficial or desired results. An effective amount can be administered in one or more administrations. In terms of treatment and protection, an "effective amount" is that amount sufficient to ameliorate, stabilize, reverse, slow or delay progression of the disease states.

In a first aspect, the present invention is directed to a biocontrol composite microbial agent combination (herein named "PS combination") that can prevent and control soil-borne diseases of a variety of vegetables, comprising two kinds of bacterial components: PX35 strain and SM21 strain, both of which are *Bacillus* spp. and were deposited at the China General Microbiological Culture Collection Center (CGMCC), wherein, PX35 was deposited on January 26, 2007 and its Culture Collection No. was CGMCC NO. 1930; SM21 was deposited on May 24, 2007 and its Culture Collection No. was CGMCC NO. 2058.

In a second aspect, the present invention relates to a composite biocontrol microbial agent combination (herein named "PSX combination") for controlling soil-borne diseases of various crops, comprising three kinds of bacterial components, i.e. PX35, SM21 and XY21. Both of the PX35 and SM21 strains belong to *Bacillus* spp., which were deposited at the China General Microbiological Culture Collection Center (CGMCC), and the collection numbers of PX35 and SM21 were CGMCC NO.1930 and CGMCC NO. 2058, respectively. XY21 strain belongs to *Serratia* sp., and was deposited at the CGMCC on May 24, 2007, with collection number of CGMCO NO.2059.

In another aspect, the present invention is directed to a method for preparing the PS or the PSX combination as defined above comprising the following steps:

1) inoculating the strains (PX35 and SM21 for PS combination; PX35, SM21, and XY21 for PSX combination) into PDA culture solution and cultivating them until their optical density (OD) values at 600 nm are within about 0.1-1;

2) adding the seed liquid to PDA culture solution, shaking, cultivating and centrifugating to obtain wet bacteria;

3) mixing wet bacteria and bacterial preservative to obtain the microbial agent and then mixing the two (for PS combination) or three (for PSX combination) microbial agents to obtain the composite biocontrol microbial agent combination;

The term "PDA" is the abbreviation for Potato Dextrose Agar, a common medium known by the skilled person. The PDA culture solution may be prepared as follows: 200 g of potatoes (peeled or unpeeled) are cut into small dices, put into boiling water and boiled for at least 20 min. Then the mixture is filtered with four-layer medical gauze, 20 g of common sucrose are added into the filtrate, the volume is fixed at 1000 mL, pH value adjusted to 7.2-7.4, and the liquor is sterilized at 121°C with 15 atmospheric pressures for 20 min.

The combination of strains may be mixed with a bacterial conservation liquid such as those known in the art, such as for example the liquid described in CN1358838.

In a preferred embodiment, the bacterial conservation liquid (preservative) comprises a buffer solution, more preferably a phosphate solution, and a surfactant. For example, it can be a 0.01mol/L phosphate buffer solution and also may contain 0.001mol/L Tween20 (nonionic surfactant). The 0.01mol/L phosphate buffer solution may be prepared as follows: 8 g of NaCl, 0.2 g of KCl, 1.44 g of $Na_2HPO_4$ and 0.24 g of $KH_2PO_4$ are dissolved into 800 mL of distilled water, HCl is used to adjust the pH value of the solution to 7.4 and in the end distilled water is added to fix the volume at 1 L. It may be conveniently sterilized in 15lbf/in$^2$(1034 x 105Pa) steam for at least 20 min and stored at room temperature or 4 °C in a refrigerator). Further, it may also contain 0.001 mol/L Tween20 (nonionic surfactant).

A particular embodiment of the method for preparing the PS or the PSX combination as defined above is described hereinafter:

The different strains (PX35 and SM21 for PS combination; PX35, SM21, and XY21 for PSX combination) are inoculated into PDA culture solution and cultivated at about 37 °C with 180 rpm for 24 hours, respectively. After that, they are separately sampled on a super clean bench to determine optical density (OD) values at 600 nm by using uv-vis spectrophotometer (UV1000, Shanghai techcomp scientific instrument Co. Ltd.). During determination, the uninoculated culture solution is used to set zero (as control) in the process.

The strains are preferably cultivated till all OD values are within 0.1-1, more preferably 0.5-0.8. If any OD value is not found in the desired range, the strains may still be cultivated continuously and OD value will be determined every three hours until all OD values are within this range.

Afterwards, seed bacteria solution may be added to PDA culture solution, preferably at a ratio of 1:100. It is shaken, cultivated at about 30°C with 180 rpm for 36 hours and then centrifuged at about 4000 g for 10 min so that 13-16 g of wet bacteria may be obtained from 1000 mL of culture solution (one gram of wet bacteria contains about 4 × $10^{10}$-$10^{15}$ bacteria).

Wet bacteria and bacterial conservation liquid are mixed, preferably at a ratio of about 1: 40 (g/mL) to obtain microbial agent. The two or three microbial agents (PX35 and SM21 for PS combination; PX35, SM21, and XY21 for PSX combination) are evenly mixed, preferably at a ratio of about 1:1 or 1:1:1 to obtain the composite biocontrol microbial agents PS and PSX, respectively. In finished product, the total concentration of viable bacteria is about 1 × $10^9$ ~1 × $10^{14}$cfu/mL. [cfu: abbreviation for "colony forming units"]

The microbial agent can be stored for 2-3 years at room temperature.

The biocontrol composite microbial agent of the present invention can be presented in a form which is not particularly limited and it can take any form that a common agricultural and horticultural agent may take. The control agent may take, for example, powder formulation, wettable powder, emulsion, flowable formulation, and granular formulation. In a preferred embodiment it is liquid form comprising the wet bacteria and the conservation liquid.

The formulations, compositions or preparations containing the composite microbial agent combination of the present invention, where appropriate, a solid or liquid adjuvant, are prepared in known manner, for example by homogeneously mixing with extenders, for example solvents, solid carriers and, where appropriate, surface-active compounds (surfactants).

The agents of the invention are appropriate for any crops cultivated in greenhouses or fields. By the term "crop" it is understood any plant cultivated by man and having an economical value.

Target crops to be protected within the scope of the present invention comprise e.g., the following species of plants: cereals (wheat, barley, maize, rye, oats, rice, sorghum and related crops), beet (sugar beet and fodder beet), pomes, drupes and soft fruit (apples, pears, plums, peaches, almonds, cherries, strawberries, raspberries and blackberries), leguminous plants (beans, lentils, peas, soybeans), oil plants (rape, mustard, poppy, olives, sunflowers, coconut, castor oil plants, cocoa beans, groundnuts), cucumber plants (cucumber, marrows, melons), fibre plants (cotton, flax, hemp, jute), citrus fruit (oranges, lemons, grapefruit, mandarins), vegetables (spinach, lettuce, asparagus, cabbages, carrots, onions, tomatoes, potatoes, paprika), lauraceae (avocados, cinnamon, camphor), or plants such as maize, tobacco, nuts, coffee, sugar cane, tea, vines, hops, bananas and natural rubber plants, as well as ornamentals (composites). The compositions may also be useful for storage protection of natural substances which are in freshly harvested or further processed form.

In a preferred embodiment the crops are selected from the group formed by vegetables, banana or rice.

The method for controlling plant diseases according to the present invention is not particularly limited as long as it is a method comprising treating a plant and/or grove soil thereof with a plant disease controlling agent of the present invention, and it can be appropriately selected depending on such as a type of the plant disease and a type of the applicable plant in a similar manner to when ordinary chemical pesticides are used. For example, a plant may be treated with a plant disease controlling agent of the present invention by being, for instance, directly applied or sprayed with a plant disease controlling agent of the present invention. Alternatively, the soil where the plant is grown (grove soil of the plant) may be treated with a plant disease controlling agent of the present invention by being, for instance, mixed, sprayed or irrigated with a plant disease controlling agent of the present invention. Herein, when a plant disease controlling agent of the present invention is treated on the grove soil of a plant, either the plant may be planted after the soil has been treated with a plant disease controlling agent of the present invention, or the soil may be treated with a plant disease controlling agent of the present invention after the plant has been planted to the soil.

The microbial agents can be made for example into composts through being poured into organic fertilizer before transplanting or be sprayed on the terrace with organic fertilizer before transplanting, and then buried in the soil with fertilizer in the process of soil preparation, or it also -can be used in the irrigation root during the transplanting. After sprouting, said agent can achieve the effect on controlling soil-borne diseases through a variety of biocontrol mechanisms.

The present invention relates to the use of a biocontrol composite microbial agent PS combination for preventing and controlling soil-borne diseases of various vegetables such as wilt, blight (phytophthora disease), and root-knot nematodes existing in greenhouse and field.

Experiments indicate that the use of PS composite microbial agent in greenhouses shows an efficacy (58~77%) against different soil-borne diseases (mainly bacterial wilt, phytophthora disease and root knot nematode) and its growth promotion effect can also reach above 50%, superior to single species microbial agents and chemical agents; when PS composite microbial agent is applied in fields, its efficacy against the mixed attack of two or three soil-borne diseases is 60%~86% and the yield in diseased fields is increased by 53%~81%.

In another aspect, the present invention relates to the use of a biocontrol composite microbial agent PSX combination for preventing and controlling soil-borne diseases of various crops and its active components in prevention and control of various soil-borne diseases on vegetables, bananas, rice and other crops existing in the greenhouse and field.

The experiments showed that PSX combination can be used to control plant soil-borne diseases that complexly or solely occurred, such as tomato, pepper, cucumber, sponge gourd, watermelon and other fruits and vegetables root knot nematode disease, bacterial wilt, verticillium wilt and the blights, and its disease-preventing effect was 160-100% and the yield increase was 30-200%. The effects of preventing Fusarium wilt of banana and rice sheath blight disease are more than 50%, and have 20-80% yield increase. In addition, the PSX combination also can improve soil hardening.

## EXAMPLES

## Common procedures

Usage of PS/PSX combinations

The PS/PSX combinations can be used by the method of root-irrigating, mixing with fertilizer and etc.

### 1. Root-irrigating

After the well-composted organic fertilizers are applied, the dilute microbial agent is irrigated to the root of the plant for normal root growth when the plants were transplanted. The amount of the used microbial agent is approximately 6000 mL per mu (1 mu= 0.0667 hectares) (dilute the microbial agent to 200-300 times prior to the application, and the amount for each seeding is about 100 mL). The usage frequency can vary slightly, depending on the growing periods of the crops in different regions. With regard to the cucumbers or peppers, and etc. in autumn with a greenhouse growth cycle of more than three months, they generally would be treated three times in all to achieve the optimum efficiency. Specifically, the treatments take place when the plants are transplanted, or one month after transplantation, or two months after transplantation respectively. With regard to the plants with growth cycle of 2-3 months, the treatments would take place when the plants are transplanted, and one month after transplantation, respectively, i.e. there are two treatments in all.

### 2. Mixing with fertilizer

Dilute the microbial agent (3000 mL per mu) 20-30 times and then add them into the base fertilizer (well-composted soyabean cake/ rapeseed cake/animal manure and etc.). After the microbial agent is mixed with base fertilizer uniformly, the mixture is immediatley spread into the earth. Then the earth is turned over and is covered with plastic films for 15 days (5-8 days for summer, whereas 7-15 days for winter) prior to the transplantation. With regard to the cucumbers or peppers, and etc. in autumn with a greenhouse growth cycle of more than three months, they are treated by root - irrigating one and two months after transplantation respectively by using the microbial agent (6000 mL per mu) which has been diluted by 200- 300 times. With regard to the plants with growth cycle of 2-3 months, the treatments would take place when the plants are tansplanted, and one month after transplantation, respectively, i.e. there are two treatments in all.

**Usage of chemical pesticides as control**

1. Controlling the occurrence of bacterial wilt, phytophthora blight and root knot nematode disease in field experiment

Streptomycin for agricultural use, metalaxyl-mancozeb and abamectin are three common pesticides for controlling bacterial wilt, blight and root knot nematode disease in China.

The amount of 2% abamectin is 25 mL/mu, and it is diluted by 2000 times to achieve the concentration of 500 ppm prior to use. The abamectin is sprayed to the soil before the plants are transplanted.

The amount of 58% metalaxyl-mancozeb is 100 g/mu, and it is diluted by 50 kg water to the concentration of 2000 ppm prior to use. The metalaxyl-mancozeb is sprayed uniformly to the root of the plants before the plants are transplanted. 7 days after the transplantation, the plants are treated with metalaxyl-mancozeb again in the same way to the first time.

The amount of 72% streptomycin for agricultural use is 10 g/mu (12.5 mL/hole $\times$ 4000 holes), and it is diluted by 5000 times to acheive the concentration of 200 ppm prior to use. The streptomycin for agricultural use is sprayed uniformly to the root of the plants before the plants are transplanted. 7 days after the transplantation, the plants are treated with streptomycin for agricultural use again in the same way to the first time.

2. Controlling the occurrence of bacterial wilt, phytophthroa blight and root nematode disease in greenhouse experiment.

After 2% abamectin is diluted by 5000 times to achieve the concentration of 200 ppm, it is used in root-irrigating with a mount of 100 mL/hole. The abamectin is sprayed to the soil before the plants are transplanted.

After 58% metalaxyl-mancozeb is diluted by 500 times of water, it is used in root-irrigating with a mount of 40 mL/pot. The metalaxyl-mancozeb is sprayed uniformly to the root of the plants before the plants are transplanted. 7 days after the transplantation, the plants are treated again in the same way to the first time.

After 72% streptomycin for agricultural use is diluted by 5000 times, it is used in root-irrigating with a mount of 50 mL/pot. The streptomycin for agricultural use is sprayed uniformly to the root of the plants before the plants are transplanted. 7 days after the transplantation, the plants are treated again in the same way to the first time.

**1. Greenhouse experiment for PS combination**

Capsicum seeds were sowed in seedling-raising pans. On the 21$^{st}$ day after sowing, the seedlings were transplanted. One pot accommodated one seedling. Each treatment adopted 24 potted capsicum seedlings and 3 repetitions. The soil was nursery substrate (produced by Huaian Chaimihe Substrate fertilizer Co., Ltd.) without any pathogen. In the same time when the capsicum seedlings were transplanted, 40 mL of $10^8$ CFU/mL bacteria solution were irrigated into each pot. Greenhouse conditions were as follows: 28-32 °C, relative humidity 40% and natural lighting.

i) Greenhouse experiment for prevention and cure of capsicum ralstonia wilt

36 hours after capsicum seedlings were transplanted, $4 \times 10^5$ CFU/mL *Ralstonia solanacearum* JS55 solution was irrigated at concentration of $2 \times 10^5$ CFU/g of soil (one pot contained 80 g of soil and was irrigated with 40 mL of $4 \times 10^5$ CFU/mL *Ralstonia solanacearum* JS55 solution); Control 1 was treated with clear water at first and then irrigated with *Ralstonia solanacearum* solution; Control 2 was treated with 50 mL/seedling 200 ppm streptomycin for agricultural use (produced by North China Pharmaceutical Co., Ltd., Shijiazhuang) and 36 hours later, *Ralstonia solanacearum* solution at the same concentration as mentioned above was irrigated. On the 35$^{th}$ day after the capsicum seedlings were transplanted, the statistics of disease severity and efficacy were conducted. The disease index of Ralstonia wilt was classified into 0-4 levels according to Kempe and Sequeira (1983). [Disease severity of Ralstonia wilt (DSR)]=[$\Sigma$ (Number of the plants at each disease level $\times$ Disease index of Ralstonia wilt)/(Total number of the investigated plants $\times$ Maximum disease index of Ralstonia wilt)] $\times$ 100%

ii) Greenhouse experiment for prevention and cure of capsicum phytophthora disease

3 days after capsicum seedlings were transplanted, 40 mL of $5 \times 10^3$ CFU/mL Phytophthora spore suspension containing $2 \times 10^5$ spores was irrigated into each pot; Control 1 was treated with clear water during transplanting and 3 days later was irrigated with a same volume of Phytophthora spore suspension; Control 2 was treated with 40 ml of 58% metalaxyl mancozeb wettable powder (produced by Baoying Chemical Factory, Baoying, Jiangsu) 600 times solution and 3 days later was irrigated with Phytophthora spore suspension of the same volume as mentioned above. 7 days after the transplanting of capsicum seedlings, the treatment was repeated once. 35 days after the transplanting, the statistics of disease severity and efficacy were conducted. The disease index of capsicum phytophthora disease was classified into 0-5 levels according to Rajkumar et al (2005). [Disease severity of Phytophthora blight (DSP)] =[$\Sigma$(Number of the plants at each disease level $\times$ Disease index of Phytophthora blight)/(Total number of the investigated plants $\times$ Maximum disease index of Phytophthora blight)] $\times$ 100%

iii) Greenhouse experiment for prevention and cure of root knot nematode

48 hours after capsicum seedlings were transplanted, 2000 second-instar larvae were inoculated into each pot; Control 1 was treated with clear water during transplanting and 48 hours later nematodes were inoculated, with the same concentration as mentioned above; Control 2 was treated with 2000-times 1.8 % abamectin (produced by North China Pharmaceutical Co., Ltd., Shijiazhuang) at a dose of 100 mL/plant and 48 hours later nematodes were inoculated, with the same concentration as mentioned above. 10 days later, the treatment was repeated once. 55 days after the transplanting, the statistics of disease severity and efficacy were conducted. The disease index of root knot nematode was classified according to the 10-level standard of Daulton and Nusbaum (1961). [Disease severity of root knot nematode (DSM)] =[$\Sigma$(Number of the plants at each disease level $\times$ Disease index of root knot nematode)/(Total number of the investigated plants $\times$ Maximum disease index of root knot nematode)] $\times$ 100%

**iv) Growth promotion experiment**

The concentration of each antagonistic bacteria suspension was $10^8$ CFU/mL. Each treatment was planted in a 50-hole seedling-raising pan (4.8$\times$4.8$\times$6.0 cm). Each treatment adopted 3 repetitions and 150 seedlings in total. The soil was nursery substrate (produced by Huaian Chaimihe Substrate Fertilizer Co., Ltd.) and did not contain any pathogen. Greenhouse conditions were as follows: 28-32 °C, relative humidity 40% and natural lighting. After capsicum was sowed, 10 mL of antagonistic bacteria suspension were irrigated to each hole at once. Each control hole was irrigated with 10 mL of clear water. 35 days later, statistics of the fresh weight of the aboveground part and roots were conducted.

Total fresh weight=Fresh weight of roots + Fresh weight of the aboveground part Promotion effect=[(Average fresh weight of the treatment groups - Average fresh weight of the control groups)/ Average fresh weight of the control groups]$\times$ 100% SPSS13.0 software was used for the statistics of the experimental results. Average value and standard deviation were calculated; single-factor variance analysis was done. Doncan (P=0.05) was adopted to check the significance of the difference. Greenhouse experiment indicated the efficacy of PS composite microbial agent against Ralstonia wilt in greenhouses was 67.40% (Table 1) and that against capsicum phytophthora disease was 77.32% (Table 2) and that against root knot nematode reached 58.59% (Table 3); and it could promote plant growth and the fresh weight of capsicum seedlings increased by 52.80% (Table 4).

Table 1. PS composite microbial agent greenhouse experiment for prevention and cure of capsicum bacterial ralstonia wilt

| Treatment | Incidence (%) | Efficacy (%) |
|---|---|---|
| PX35+SM21 | 29.74$\pm$1.20d | 67.40 |
| SM21 | 36.98$\pm$1.36cd | 59.47 |
| PX35 | 49.61$\pm$1.69c | 45.62 |
| Control 1* | 62.71$\pm$0.74b | 31.26 |
| Control 2** | 91.23$\pm$1.12a | - |

*Control 1: Irrigate roots with 200 ppm Streptomycin for agricultural use
**Control 2: Treat with clear water

Table 2. PS composite microbial agent greenhouse experiment for prevention and cure of capsicum phytophthora disease

| Treatment | Incidence (%) | Efficacy (%) |
|---|---|---|
| PX35+SM21 | 19.19$\pm$0.73d | 77.32 |

(continued)

| Treatment | Incidence (%) | Efficacy (%) |
|---|---|---|
| PX35 | 22.42±0.54c | 73.50 |
| SM21 | 29.77±1.14b | 64.81 |
| Control 1* | 29.18±1.35b | 65.51 |
| Control 2** | 84.60±0.88a | - |

*Control 1: Irrigate with 58% metalaxyl mancozeb wettable powder 500-times solution once and 5 days later spray once
**Control 2: Clear water

Table 3. PS composite microbial agent greenhouse experiment for prevention and cure of capsicum root knot nematode

| Treatment | Incidence (%) | Efficacy (%) |
|---|---|---|
| PX35+SM21 | 36.98±0.41d | 58.59 |
| PX35 | 42.68±0.73cd | 52.21 |
| Control 1* | 57.82±0.64bc | 35.26 |
| SM21 | 62.70±0.80b | 29.79 |
| Control 2** | 89.31±1.01a | - |

*Control 1: Irrigate roots with 50ppm avermecti twice at an interval of 10 days
**Control 2: Clear water

Table 4. Greenhouse experiment about PS composite microbial agent for promotion of capsicum growth

| Treatment | Fresh weight (g) | Increment of fresh weight (%) |
|---|---|---|
| PX35+SM21 | 3.287±0.11c | 52.90 |
| PX35 | 2.910±0.17b | 35.36 |
| SM21 | 2.798±0.03b | 30.14 |
| Control 1* | 2.150±0.14a | - |

*Control 1: Clear water

**2. Field experiment for PS combination**

The field experiments for efficacy of PS composite microbial agent against a plurality of soil-borne diseases were done in Jiangsu's Huaian and Hebei's Gaocheng in 2007 and 2008. The microbial agent can be sprayed before crop transplanting, and can also be used after it is made into compost, or may be diluted and then irrigated to roots during transplanting. The result of disease investigation was same as that of the greenhouse experiment.

Total disease severity=Disease severity of Ralstonia wilt + Disease severity of phytophthora disease + Disease severity of root knot nematode

Prevention and cure efficacy=[(Total disease severity of the control groups - Total disease severity of the treatment groups)/Total disease severity of the treatment groups] ×100%

$$\text{Yield increase effect} = [(\text{Average yield of the treatment groups} - \text{Average yield of the control groups})/\text{Average yield of the control groups}] \times 100\%$$

The results of field experiments indicates PS combination showed a very good effect of disease resistance and yield increase in the fields with complex infection of a plurality of soil-borne diseases. The results of the experiments in the two areas in two years indicate the efficacy against mixed diseases (phytophthora disease and root knot nematode) of spring capsicum in Hebei's Gaocheng reached 61.77% and yield was increased by 55% (Table 5); and the efficacy against these two diseases of autumn capsicum was 77.07% and yield was increased by 79.15% (Table 6), which were better than the efficacy of chemical pesticides and single microbial agent. In Jiangsu's Huaian, the efficacy against mixed diseases (bacterial wilt, phytophthora disease and root knot nematode) of spring capsicum was 67.33% and yield was increased 54% (Table 7); the efficacy against these three diseases in autumn was 86.27% which is stable and the average yield increase was 81.39% (Table 8), which was much superior to the combination of single microbial agent and chemical pesticide.

Table 5. Influence of PS combination and chemical pesticide on the yield and soil-borne disease efficacy of the capsicum in Hebei's Gaocheng in the autumn of 2007

| Treatment | Yield (Kg/plot) | Yield increase rate (%) | Incidence of mixed diseases (%) | Efficacy (%) |
|---|---|---|---|---|
| PX35+SM21 | 21.02±1.98c | 55.37 | 7.40±1.66c | 61.77 |
| PX35 | 19.46±1.79bc | 43.84 | 8.97±1.99c | 53.65 |
| SM21 | 18.32±2.32b | 35.39 | 10.02±2.84bc | 48.24 |
| Metalaxgl mancozeb + Avermecti | 17.22±2.04b | 27.26 | 11.98±2.43b | 38.12 |
| Control | 13:53±1.98a | - | 19.36±255a | - |

Table 6. Influence of PS combination and chemical pesticide on the yield and soil-borne disease efficacy of the capsicum in Hebei's Gaocheng in the spring of 2008

| Treatment | Yield (Kg/plot) | Yield increase rate (%) | Incidence of mixed diseases (%) | Efficacy (%) |
|---|---|---|---|---|
| PX35+SM21 | 20.37±2.64c | 79.15 | 6.13±2.14d | 77.07 |
| PX35 | 16.98±2.33bc | 49.38 | 10.67±1.95c | 60.09 |
| SM21 | 15.91±2.58b | 39.97 | 11.95±2.58c | 55.30 |
| Metalaxgl mancozeb + Avermecti | 15.26±2.58b | 34.20 34.20 | 15.39±2.45b | 42.46 |
| Control | 11.37±2.91a | - | 26.74±2.59a | - |

Table 7. Influence of PS combination and chemical pesticide on the yield and soil-borne disease efficacy of the capsicum in Jiangsu's Huaian in the autumn of 2007

| Treatment | Yield (Kg/plot) | Yield increase rate (%) | Incidence of mixed diseases (%) | Efficacy (%) |
|---|---|---|---|---|
| PX35+SM21 | 22.07±2.13d | 53.47 | 6.06±1.48c | 67.33 |
| PX35 | 20.22±1.69c | 40.61 | 8.52±1.81bc | 54.07 |
| SM21 | 19.07±1.69bc | 32.59 | 9.65±2.43bc | 47,94 |

(continued)

| Treatment | Yield (Kg/plot) | Yield increase rate (%) | Incidence of mixed diseases (%) | Efficacy (%) |
|---|---|---|---|---|
| Streptomycin for agricultural use + Metalaxgl mancozeb + Avermecti | 17.95±2.69b | 24.83 | 11.46±1.64b | 38.19 |
| Control | 14.38±2.40a | - | 18.54±2.94a | - |

Table 8. Influence of PS combination and chemical pesticide on the yield and soil-borne disease efficacy of the capsicum in Jiangsu's Huaian in the spring of 2008

| Treatment | Yield (Kg/plot) | Yield increase rate (%) | Incidence of mixed diseases (%) | Efficacy (%) |
|---|---|---|---|---|
| PX35+SM21 | 22.98±1.79d | 81.39 | 3.39±2.33d | 86.27 |
| PX35 | 20.64±2.04c | 62.89 | 8.41±1.78c | 65.92 |
| SM21 | 19.06±1.98c | 50.41 | 10.39±2.33bc | 57.90 |
| Streptomycin for agricultural use + Metalaxgl mancozeb + Avermecti | 16.81±2.43b | 32.70 | 13.85±2.72b | 43.92 |
| Control | 12.67±2.83a | - | 24.69±3.80a | - |

In tables 1-8, the significance of data difference (indicated with letters a-d) is checked with SPSS statistical software at the level of LSD test (P = 0.05).

All treatments adopt 4 repetitions. The data in tables 1-8 are the average values and standard deviations of four repetitions.

### 3. Biocontrol efficacy of PSX family in controlling complex occurence of bacterial wilt, phytophthora blight and root knot nematode disease in greenhouse

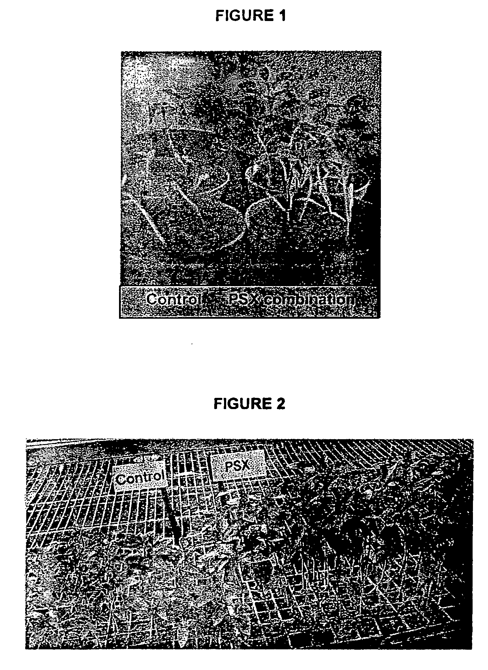

In the greenhouse experiment, we compared the biocontrol efficacy of PSX family that included 3 single strains PX35, SM21, and XY21; 3 two-strain combinations and the PSX combination. We used 4 controls. Control 1 was only treated with fresh water; Control 2, 3 and 4 were respectively treated with streptomyces, metalaxyl-mancozeb and abamectin (the three pesticides are common pesticides for controlling bacterial wilt, blight and root knot nematode disease in China). The results are shown in Table 9 and Fig. 1.

Table 9. Biocontrol efficacy of PSX family in controlling complex occurence of bacterial wilt, phytophthora blight and root knot nematode disease in greenhouse

| Treatments | Disease severity* (%) | | | Biocontrol efficacy (%) | | |
|---|---|---|---|---|---|---|
| | Ralstonia wilt | Phytophthora blight | Root knot nematode disease | Ralstonia wilt | Phytophthora blight | Root knot disease |
| PX35 | 18.08±2.4 | 30.10±3.6[a] | 17.88±1.5[e] | 64.39±2.2 | 80.48±4.3[b] | 65.04±3.1[b] |
| SM21 | 27.60±4.9[cd] | 44.73±4.5[c] | 31.2±3.2[b] | 50.3±2.7[f] | 63.36±3.6[e] | 41.65±2.7[e] |
| XY21 | 32.50±5.1[c] | 60.30±4.6[b] | 28.94±2.6[bc] | 80.2±3.2[c] | 53.45±2.7[g] | 21.33±1.6[g] |
| PX35+SM21 | 15.23±2.3[e] | 30.93±3.8[d] | 23.925±2.2[c] | 75.27±3.2[d] | 79.83±2.7[b] | 65.53±4.7[b] |

(continued)

| Treatments | Disease severity* (%) | | | Biocontrol efficacy (%) | | |
|---|---|---|---|---|---|---|
| | Ralstonia wilt | Phytophthora blight | Root knot nematode disease | Ralstonia wilt | Phytophthora blight | Root knot disease |
| PX35+XY21 | 15.35±2.6e | 29.30±2.6d | 20.88±1.5de | 82.85±4.7b | 71.79±4.4c | 51.01±2.5c |
| SM21+XY21 | 21.95±4.1de | 41.35±2.6c | 27.43±2.1bc | 82.71±4.8b | 57.66±2.4f | 36.05±2.4f |
| PX35+SM21+XY21 | 6.88±2.5t | 13.94±1.5e | 11.98±1.0f | 92.25±3.9a | 85.94±5.1a | 73.45±4.8a |
| Control 1 | 91.23±3.9a | 76.65±3.5a | 88.65±1.0a | - | - | - |
| Control 2 | 53.53±5.5b | - | - | 39.71±2.5g | - | -- |
| Control 3 | - | 40.35±2.7c | - | - | 67.62±3.8d | - |
| Control 4 | - | - | 30.58±2.7b | - | - | 47.36±3.3d |

*Disease severity was calculated according to the disease index of bacterial wilt, phytophthora blight, root knot nematode disease. The values are means ± S.D, followed by the different letters within a column are significantly different as determined by the Duncan test ($P$= 0.05).

## 4. Growth promotion of PSX family on the pepper in greenhouse

Table 3 shows the plant growth promotion efficacy of each single bacterial strain, each two-strain combinations of the PSX family and PSX combination. The PSX combination showed the strongest effects on plant growth promotion, biomass was increased by 64.67%; while the other treatments in the PSX family had the 4.85-21.14% biomass increases. The increases of both root freshweight and shoot freshweight (96.19% and 59.73%) caused by the PSX combination were significantly higher than the counterparts (11.74-50.33% and 3.79-16.63%) by the other treatments in the PSX family.

Table 10. Growth promotion efficacy of PSX family on pepper in the greenhouse

| Treatments | Root freshweight * (g/plant) | Root freshweight increase (%) | Shoot freshweight * (g/plant) | Shoot freshweight increase (%) | Total fresh weight * (g/ plant) | Biomass increase (%) |
|---|---|---|---|---|---|---|
| PX35 | 0.401±0.0c | 17.68±2.5e | 2.496±0.0bc | 12.94±2.01cd | 2.897±0.1bc | 13.58±1.2e |
| SM21 | 0.482±0.0b | 41.67±2.3c | 2.505±0.2bc | 13.35±1.56c | 2.987±0.2bc | 17.14±2.2c |
| XY21 | 0.381±0.0cd | 11.74±1.2g | 2.293±0.1bc | 3.79±0.49e | 2.674±0.2cd | 4.85±0.9f |
| PX35+SM21 | 0.512±0.0b | 50.33±2.8b | 2.577±0.1b | 16.63±1.75b | 3.089±0.2b | 21.14±2.15b |
| PX35+XY21 | 0.393±0.0cd | 15.26±1.6f | 2.496±0.2c | 12.98±1.55cd | 2.889±0.2bc | 13.28±1.8e |
| SM21+XY21 | 0.466±0.1b | 36.83±1.9d | 2.471±0.1bc | 11.81±1.74d | 2.937±0.2bc | 15.16±2.2d |
| PX35+SM21+XY21 | 0.669±0.0a | 96.19±5.1a | 3.530±0.2a | 59.73±3.91a | 4.199±0.3a | 64.67±4.8a |
| Control** | 0.341±0.0d | 0.00 | 2.210±0.1c | 0.00 | 2.550±0.1d | 0.00 |

* The data shown were the average of three repetitions of this experiment. The values are means ± S.D, followed by the different letters within a column are significantly different as determined by the LSD test ($P$=0.05). The data were expressed as the average of three repetitions.
** Control means that the seedlings were treated with fresh water.

5. Biocontrol efficacy of PSX combination against complex diseases on pepper in the field

The complex diseases including bacterial wilt, phytophthora blight, and root knot nematode disease regularly occurred at Huaian district of Shandong province and Linyi districts of Jiangsu province. Ninety days after the treatment of PSX combination in Huaian districts, the PSX combination achieved total biocontrol efficacy of 79.05% and yield increase of 149.2%, while the chemical pesticides showed total biocontrol efficacy of 52.55% and yield increase of 80.0% (Table 11). Similar results were obtained in Linyi districts of Shandong province.

Table 11. Biocontrol efficacy against complex disease and pepper yield increase 90 days after PSX treatment in the field of Huaian city, Jiangsu province

| Treatments | Disease severity (%)* | | | Total biocontrol efficacy (%)* | Yield (g/plant)* | Yield increase (%)* |
|---|---|---|---|---|---|---|
| | Ralstonia wilt | Phytophthora blight | Root knot nematode disease | | | |
| PSX | 2.81±0.14c | 2.29±0.32c | 2.26±0.25c | 79.05±6.02a | 309.5±112.5a | 149.2±7.3a |
| Control 1** | 12.44±2.23a | 14.67±1.15a | 6.12±0.78a | - | 124.2±71.6c | - |
| Control 2** | 4.55±0.62b | 8.47±1.54b | 3.75±0.19b | 52.55±7.11b | 223.5±88.3b | 80.0±4.5b |

* The values of means ± S.D. The ones labeled with the different letters within a column are significantly different as determined by the Duncan test (P = 0.05). This experiment was repeated 3 times.
** Control 1 in which seedlings were only treated with water. In Control 2, the roots of seedlings were jointly treated with streptomyces, metalaxyl-mancozeb, and abamectin.

## 6. Biocontrol efficacy of PSX combination against complex disease

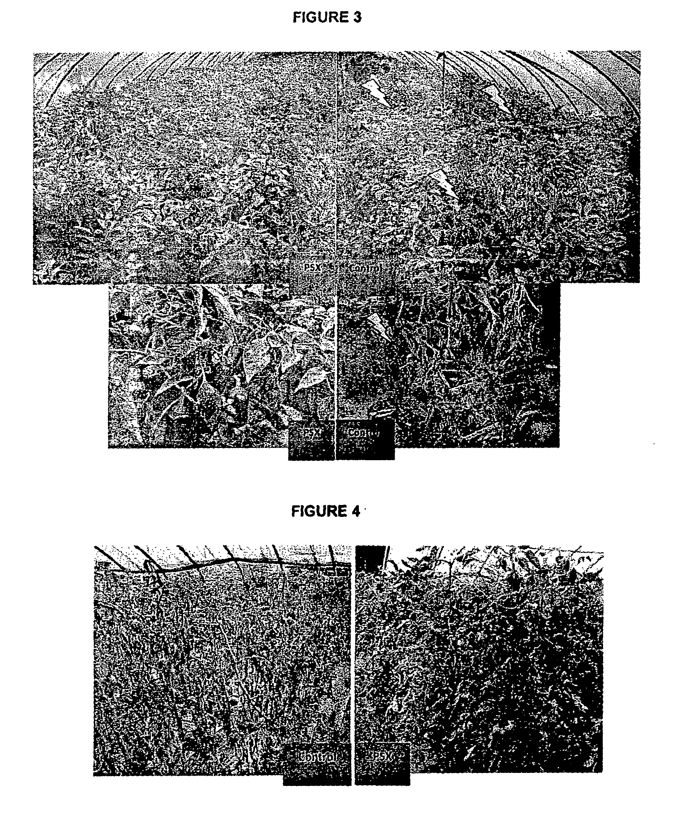

Using PSX combination, we did the field experiment in the plastic houses where a complex disease including Fusarium wilt, Root knot nematode disease, and Phytophthora bligh has happened for 8 years in Shangdong province. The results are shown in Table 12 and Fig. 4.

Table 12. Field experiment on tomato in Shangdong province (2008)

| Treatments | Disease severity (%) | Biocontrol efficacy (%) | Yield (Kg/plot**) | Yield increase (%) |
|---|---|---|---|---|
| PSX combination | 21.5±1.71b | 74.22±1.01 | 34.43±0.49b | 61.18±0.55 |
| Water control | 83.4±3.49a | - | 21.36±0.21a | - |

* Means followed by the different letters within a column are significantly different as determined by the LSD test (P = 0.05). Data represent means of experiment with 4 replications each.
** Each plot was 4 m in length and 4 m in width, and 100 pepper seedlings were planted

## 7. Biocontrol efficacy of PSX combination against complex disease on cucumber in the field

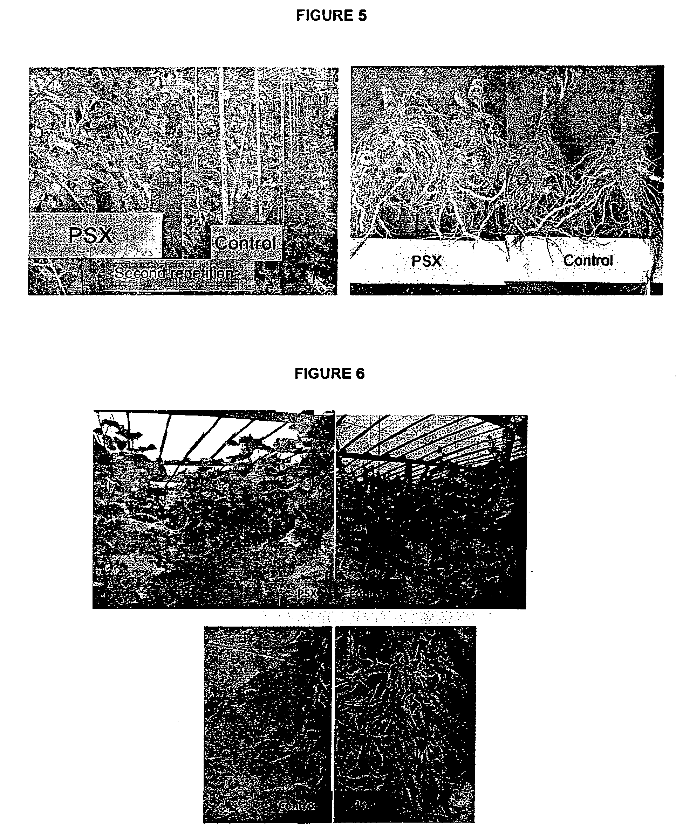

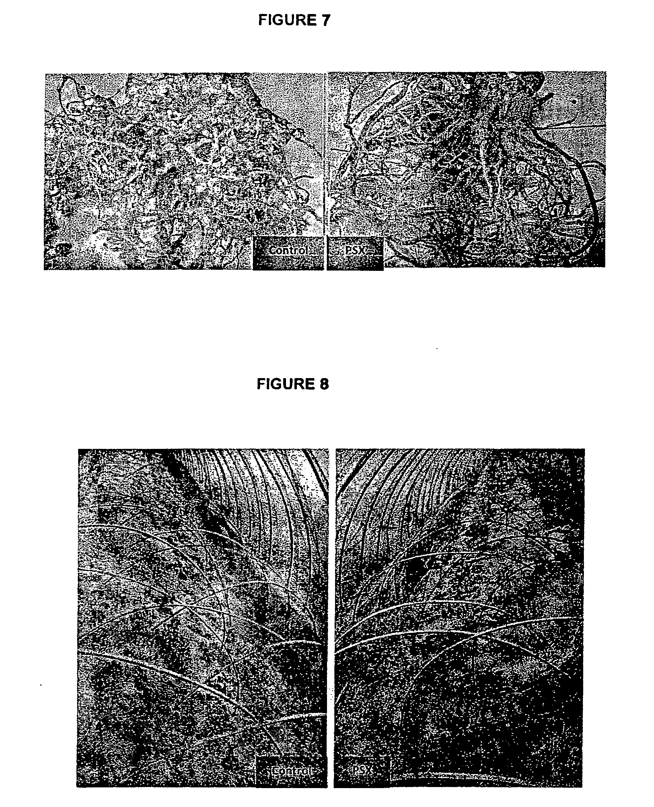

In the experiment field of Tongshan county, Xuzhou city of Jiangsu province, the cucumber had already been grown 10 years. Meloidogyne root-knot had happened very seriously, and mixed with other root-knot diseases which we had not determined the pathogen. The farmer planned to grow rice instead in 2006. We did this biocontrol experiment in 2007. The result is shown in Table 13 and Fig 6. In another field experiment in Yongnian, Handan city of Hebei province, PSX combination achieved the biocontrol efficacy of 86.5% towards root knot nematode disease, and yield increase of 56.4%. It shows difference of cucumber roots in Fig. 7.

Table 13. Field experiment on cucumber in Xuzhou city of Jiangsu province (2007)

| Treatments | Disease severity (%) | Biocontrol efficacy (%) | Yield (g/plant) | Yield increase (%) |
|---|---|---|---|---|
| PSX combination | 33.3±3.1b | 63.3±1.01 | 1305.0±38.7b | 198.8±31.5 |
| Water control | 91.1±4.2a | - | 436.7±51.2a | - |

* Means followed by the same letter within a column are not significantly different as determined by the LSD test (P = 0.05). Data represent means of experiment with 4 replications each.

## 8. Biocontrol efficacy of PSX combination towards Root knot nematode disease on watermelon in the field

Watermelon is one of the most popular fruit in China and other countries. Unfortunately, many soil-borne pathogens are fond of this plant, sometimes they even destroy the whole field. The PSX combination controlled the complex soil-borne disease with the biocontrol efficacy of 70% except for the heavy rainy day. Table 14 and Fig. 8 show the result of the field experiment that a farmer did in his own plastic house with the PSX combination in Huaian city of Jiangsu province.

Table 14. Field experiment on watermelon in Huaian city of Jiangsu province (2008)

| Treatments | Disease severity* (%) | Biocontrol efficacy* (%) | Yield* (kg/acre) | Yield increase (%) |
|---|---|---|---|---|
| PSX combination | 7.67±0.7[b] | 72.0±1.8 | 2733±38.7[b] | 41.8±31.5 |
| Water control | 27.35±2.3[a] | - | 1928±51.2[a] | - |

* Means followed by the different letters within a column are significantly different as determined by the LSD test ($P$ = 0.05). Data represent means of experiment with 3 replications each. Each plot was half plastic house (50 m in length and 4 m in width, and 100 pepper seedlings were planted)

## 9. Biocontrol efficacy of PSX combination for controlling Fusaium wilt on banana in greenhouse

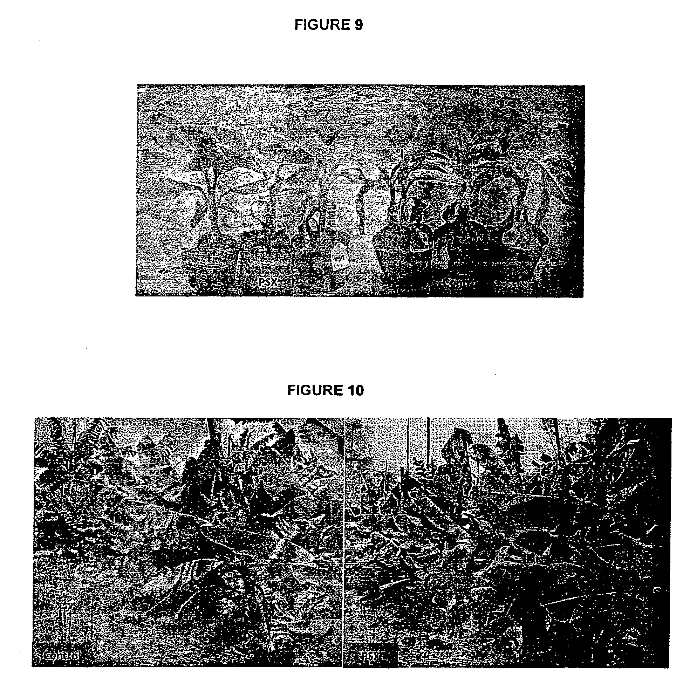

Banana wilt caused by *Fusarium oxysporum* seriously happens in Southern part of China, especially in Guangdong province. The PSX combination had the biocontrol efficacy of 53.23% and biomass increase of 27.55% in greenhouse (Fig. 9). In the fields experiment of 2009 in Zhuhai city of Guangdong province, it achieved the biocontrol efficacy of 75.02% after the bananas were transplanted for 4 months (Table 15). In Dongguan city, the biocontrol efficacy was 64.29% (Fig. 10). This field experiment will be finished in April of 2010, while it is estimated that the yield increase will be about 40-50% in the infected fields and 5-10% in the uninfected fields.

Table 15. Biocontrol and plant growth promotion of PSX combination on banana in field (Zhuhai city, Guangdong province)*

| Treatments | Disease severity (%) | Biocontrol efficacy (%) |
|---|---|---|
| PSX combination | 3.47±0.01[b] | 75.02 |
| Water control | 13.89±0.08[a] | - |

* means followed by the different letters within a column are significantly different as determined by the LSD test (P = 0.05). Data represent means of experiment with 3 replications each. Each plot was 67 m$^2$ with 12 banana plants of line "Brazil".

## 10. Biocontrol efficacy of PSX combination towards rice sheath blight in the field

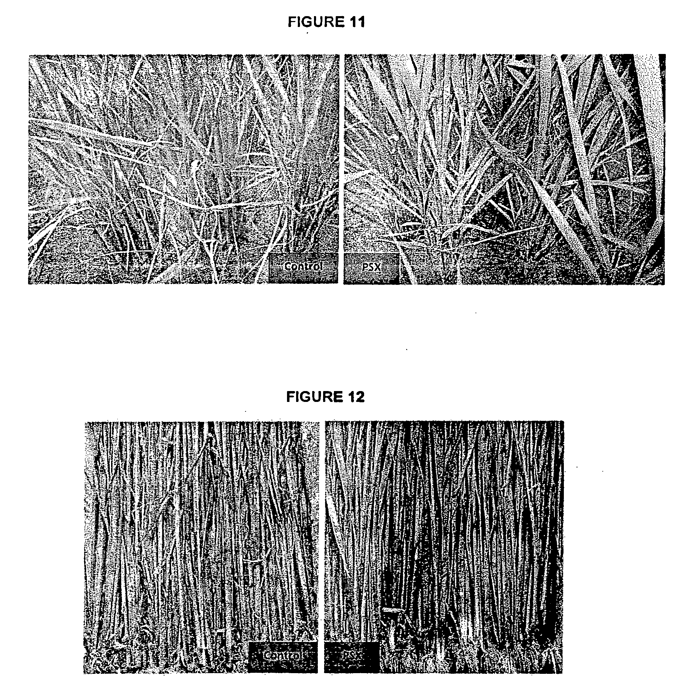

Rice the most important crop in China, and the sheath blight caused by *Rhizoctonia solani* is one of the most serious diseases in rice. We tried the PSX combination against rice blight in Lujiang county, Chaohu city of Anhui province, and obtained the better biocontrol efficacy than Jinggangmycin which is widely used to control this disease in China (Table 16, Fig. 11). The similar results were achieved in Zhenjiang city of Jiangsu province (Fig. 12).

Table 16. Biocontrol of rice sheath blight by PSX combination in the field experiment (Lujiang county of Anhui province)

| Treatments | Disease severity (%) | | | Means ±S.D | Control efficacy (%) |
|---|---|---|---|---|---|
| | I | II | III | | |
| PSX combination | 17.50 | 15.30 | 15.67 | 16.49±1.11[c] | 81.22 |
| Jinggangmycin (20%) | 27.43 | 26.52 | 25.60 | 26.51 ± 0.91[b] | 69.81 |
| Wafer control | 89.20 | 88.94 | 85.30 | 87.81±2.18[a] | - |

**Claims**

1. A biocontrol composite microbial agent combination comprising:

   - the PX35 strain of *Bacillus* spp. CGMCC 1930; and
   - the SM21 strain of *Bacillus* spp. CGMCC 2058.

2. A biocontrol composite microbial agent combination comprising:

   - the PX35 strain of *Bacillus* sp. CGMCC 1930;
   - the SM21 strain of *Bacillus* sp. CGMCC 2058; and
   - the XY21 strain of *Serratia* sp. CGMCC 2059;

3. A combination according to any of claims 1 to 2, wherein the strains are present in about the same ratio.

4. A combination according to any of claims 1 to 3, further comprising a bacterial preservative at a ratio of about 40:1 (g/mL) with respect to wet bacteria.

5. A combination according to claim 4, wherein the total concentration of viable bacteria is about $1 \times 10^9 \sim 1 \times 10^{14}$ cfu/mL.

6. A product in the form of compost or liquid comprising a combination as defined in any of claims 1 to 5 together with an organic fertilizer.

7. A method for preparing a combination as defined in claim 1, comprising the following steps:

   1) inoculating the strains PX35 and SM21 into PDA culture solution and cultivating them until their optical density values at 600 nm are within about 0.1-1;
   2) adding the seed liquid to PDA culture solution, shaking, cultivating and centrifugating to obtain wet bacteria; and
   3) mixing wet bacteria and bacterial preservative to obtain the microbial agents and then mixing the two PX35 and SM21 microbial agents to obtain the composite biocontrol microbial agent combination.

8. A method for preparing a combination as defined in claim 2, comprising the following steps:

   1) inoculating the strains PX35, SM21 and XY21 into PDA culture solution and cultivating them until their optical density values at 600 nm are within about 0.1-1;
   2) adding the seed liquid to PDA culture solution, shaking, cultivating and centrifugating to obtain wet bacteria; and
   3) mixing wet bacteria and bacterial preservative to obtain the microbial agents and then mixing the three PX35, SM21 and XY21 microbial agents to obtain the composite biocontrol microbial agent combination.

9. The use of a combination as defined in claims 1 or 2 for preventing and controlling soil-borne diseases of vegetables, fruits, cereal and other crops cultivated in greenhouse and field.

10. The use according to claim 9 wherein the soil-borne disease is selected from the group consisting of wilt, blight and root-knot nematodes.

11. The use wherein according to claim 9 wherein said crops are selected from the group consisting of vegetables, bananas and rice.

12. A method for controlling a plant disease, wherein a combination as defined in claims 1 or 2 is applied to a plant and/or grove soil of the plant.

**Patentansprüche**

1. Kombination aus mikrobiellen Agenzien als Biokontrollmittel, umfassend:

   - den PX35-Stamm von *Bacillus* spp. CGMCC 1930; und
   - den SM21-Stamm von *Bacillus* spp. CGMCC 2058.

**2.** Kombination aus mikrobiellen Agenzien als Biokontrollmittel, umfassend:

- den PX35-Stamm von *Bacillus* sp. CGMCC 1930;
- den SM21-Stamm von *Bacillus* sp. CGMCC 2058; und
- den XY21-Stamm von *Serratia* sp. CGMCC 2059.

**3.** Kombination gemäß einem der Ansprüche 1 bis 2, wobei die Stämme in etwa dem gleichen Verhältnis vorhanden sind.

**4.** Kombination gemäß einem der Ansprüche 1 bis 3, weiter umfassend ein bakterielles Konservierungsmittel in einem Verhältnis von etwa 40:1 (g/ml) in Bezug auf feuchte Bakterien.

**5.** Kombination gemäß Anspruch 4, wobei die Gesamtkonzentration an lebenden Bakterien etwa $1 \times 10^9 \sim 1 \times 10^{14}$ cfu/ml ist.

**6.** Produkt in Form von Kompost oder Flüssigkeit, umfassend eine wie in einem der Ansprüche 1 bis 5 definierte Kombination zusammen mit einem organischen Düngemittel.

**7.** Verfahren zur Herstellung einer wie in Anspruch 1 definierten Kombination, umfassend die folgenden Schritte:

1) Animpfen der Stämme PX35 und SM21 in PDA-Kulturlösung und Kultivieren der Stämme, bis deren optische Dichte-Werte bei 600 nm innerhalb etwa 0.1-1 liegen;
2) Hinzufügen der Saatflüssigkeit zu der PDA-Kulturlösung, Schütteln, Kultivieren und Zentrifugieren, um feuchte Bakterien zu erhalten; und
3) Mischen der feuchten Bakterien mit dem bakteriellen Konservierungsmittel, um die mikrobiellen Agenzien zu erhalten, und dann Mischen der beiden mikrobiellen Agenzien PX35 und SM21, um die Kombination aus mikrobiellen Agenzien als Biokontrollmittel zu erhalten.

**8.** Verfahren zur Herstellung einer wie in Anspruch 2 definierten Kombination, umfassend die folgenden Schritte:

1) Animpfen der Stämme PX35, SM21 und XY21 in PDA-Kulturlösung und Kultivieren der Stämme, bis deren optische Dichte-Werte bei 600 nm innerhalb etwa 0.1-1 liegen;
2) Hinzufügen der Saatflüssigkeit zu der PDA-Kulturlösung, Schütteln, Kultivieren und Zentrifugieren, um feuchte Bakterien zu erhalten; und
3) Mischen der feuchten Bakterien mit dem bakteriellen Konservierungsmittel, um die mikrobiellen Agenzien zu erhalten, und dann Mischen der drei mikrobiellen Agenzien PX35, SM21 und XY21, um die Kombination aus mikrobiellen Agenzien als Biokontrollmittel zu erhalten.

**9.** Verwendung einer wie in einem der Ansprüche 1 oder 2 definierten Kombination zur Prävention und Bekämpfung von bodenbürtigen Krankheiten von Gemüse, Obst, Getreide und anderen Nutzpflanzen, die in Gewächshäusern und Feldern kultiviert werden.

**10.** Verwendung gemäß Anspruch 9, wobei die bodenbürtige Krankheit ausgewählt ist aus der Gruppe bestehend aus Welke, Mehltau und Wurzelgallennematoden.

**11.** Verwendung gemäß Anspruch 9, wobei die Nutzpflanzen ausgewählt sind aus der Gruppe bestehend aus Gemüse, Bananen und Reis.

**12.** Verfahren zum Bekämpfen einer Pflanzenkrankheit, wobei die wie in Anspruch 1 oder 2 definierte Kombination auf eine Pflanze und/oder auf die Erde um die Pflanze (grove soil) aufgebracht wird.

**Revendications**

**1.** Combinaison d'agents microbiens composites de biocontrôle comprenant :

- la souche PX35 *de Bacillus spp* CGMCC 1930 ; et
- la souche SM21 *de Bacillus spp* CGMCC 2058.

2. Combinaison d'agents microbiens composites de biocontrôle comprenant :

   - la souche PX35 *de Bacillus spp* CGMCC 1930 ;
   - la souche SM21 *de Bacillus spp* CGMCC 2058 ; et
   - la souche XY21 de *Serratia spp* CGMCC 2059.

3. Combinaison selon l'une quelconque des revendications 1 à 2, dans laquelle les souches sont présentes dans environ le même rapport.

4. Combinaison selon l'une quelconque des revendications 1 à 3, comprenant en outre un conservateur bactérien à un rapport d'environ 40/1 (g/ml) par rapport aux bactéries humides.

5. Combinaison selon la revendication 4, dans laquelle la concentration totale de bactéries viables est d'environ 1 x $10^9 \sim 1 \times 10^{14}$ cfu/ml.

6. Produit sous forme de compost ou de liquide comprenant une combinaison telle que définie dans l'une quelconque des revendications 1 à 5 conjointement avec un fertilisant organique.

7. Procédé de préparation d'une combinaison telle que définie dans la revendication 1, comprenant les étapes suivantes :

   1) inoculation des souches PX35 et SM21 dans une solution de culture PDA et leur mise en culture jusqu'à ce que leurs valeurs de densité optique à 600 nm se situent entre environ 0,1 et 1 ;
   2) addition du liquide d'ensemencement à la solution de culture PDA, agitation, mise en culture et centrifugation pour obtenir des bactéries humides ; et
   3) mélange des bactéries humides et du conservateur bactérien pour obtenir les agents microbiens et ensuite mélange des deux agents microbiens PX35 et SM21 pour obtenir la combinaison d'agents microbiens de biocontrôle composites.

8. Procédé de préparation d'une combinaison telle que définie dans la revendication 2, comprenant les étapes suivantes :

   1) inoculation des souches PX35, SM21 et XY21 dans une solution de culture PDA et leur mise en culture jusqu'à ce que leurs valeurs de densité optique à 600 nm se situent entre environ 0,1 et 1 ;
   2) addition du liquide d'ensemencement à la solution de culture PDA, agitation, mise en culture et centrifugation pour obtenir des bactéries humides ; et
   3) mélange des bactéries humides et du conservateur bactérien pour obtenir les agents microbiens et ensuite mélange des trois agents microbiens PX35, SM21 et XY21 pour obtenir la combinaison d'agents microbiens de biocontrôle composites.

9. Utilisation d'une combinaison telle que définie dans les revendications 1 ou 2 destinée à la prévention et à la maîtrise des maladies telluriques des légumes, des fruits, des céréales et des autres produits agricoles cultivés sous serre et dans les champs.

10. Utilisation selon la revendication 9, dans laquelle la maladie tellurique est sélectionnée dans le groupe constitué par le flétrissement, le dépérissement et les nématodes des racines noueuses.

11. Utilisation selon la revendication 9, dans laquelle lesdits produits agricoles sont sélectionnés dans le groupe constitué par les légumes, les bananes et le riz.

12. Procédé de maîtrise d'une maladie des plantes, dans laquelle une combinaison telle que définie dans les revendications 1 ou 2 est appliquée sur une plante et/ou le sol où pousse la plante.

FIGURE 1

FIGURE 2

FIGURE 3

FIGURE 4

FIGURE 5

FIGURE 6

FIGURE 7

FIGURE 8

FIGURE 9

FIGURE 10

FIGURE 11

FIGURE 12

**EP 2 255 660 B1**

**REFERENCES CITED IN THE DESCRIPTION**

**Patent documents cited in the description**

• CN 1358838